# FASCICULE DE BREVET EUROPEEN

(11) **EP 0 896 070 B1**
(45) Date de publication et mention de la délivrance du brevet: **17.10.2001**
(21) Numéro de dépôt: 98401811.9
(22) Date de dépôt: 17.07.1998
(51) Int. Cl.: C22B 23/00, C22B 1/00, B03B 7/00, B03B 5/28

(54) **Procédé pour enrichir des minerais nickelifères oxydés**
Verfahren zum Anreichern von nickelhaltigen Oxiderzen
Process of upgrading nickel bearing oxidic ores

(30) Priorité: 06.08.1997 FR 9710074
(43) Date de publication de la demande: 10.02.1999
(73) Titulaire: Société Le Nickel-SLN, 98800 Noumea (NC)
(72) Inventeur: Cardini, Jean-Louis, 98800 Noumea, Nouvelle-Calédonie (FR); Pelletier, Bernard Gérard, 98800 Noumea, Nouvelle-Calédonie (FR)
(74) Mandataire: Eidelsberg, Victor Albert

(56) Documents cités:
- GB-A- 1 374 020
- GB-A- 1 542 901
- US-A- 4 362 558
- DATABASE WPI Section Ch, Week 8011 Derwent Publications Ltd., London, GB; Class M26, AN 80-19691C XP002061994 & SU 671 843 A (MINERAL MECH PROC) , 5 juillet 1979

## Description

L'invention concerne les procédés pour enrichir des minerais nickelifères oxydés.

Elle a plus particulièrement trait à un enrichissement des minerais de nickel oxydés silicatés dont la composition chimique, minéralogique et pétrographique peut beaucoup varier à l'intérieur d'un gisement et d'un gisement à l'autre.

Certains des minerais néo-calédoniens et notamment les minerais communément qualifiés de gamiéritiques comme ceux rencontrés dans les gisements du KOPETO ou du KONIAMBO sont un bon exemple, non limitatifs du type de minerais justiciables de l'invention.

D'une manière générale, on peut dire que tous les minerais oxydés pour lesquels la métallurgie extractive qui leur est appliquée fait appel totalement ou partiellement à des procédés pyrométallurgiques, peuvent être susceptibles d'être enrichis par le procédé. En effet, dans ces procédés, le minerai est généralement fondu après éventuelle réduction dans des fours électriques où le nickel et une partie du fer se retrouvent sous forme d'un alliage alors que les autres éléments sont éliminés dans une scorie vitreuse. Ces procédés d'extraction sont de forts consommateurs d'énergie et plus la teneur en nickel à l'entrée est élevée plus la quantité d'énergie nécessaire à l'élaboration d'une tonne de nickel sera faible et plus la quantité de métal produit sera élevée pour la même installation. La mise en oeuvre du procédé permet donc soit une diminution des coûts d'élaboration du métal soit, à structure identique, une augmentation de la quantité de métal produit.

Actuellement, la production de minerai dans les gisements de nickel oxydés de type saprolitique est assurée dans des mines à ciel ouvert. Les latérites, terme ultime de l'altération supergène des péridotites, qui constituent le recouvrement des gisements de nickel saprolitiques, sont décapées et stockées dans des sites appropriés.

La production de minerai s'opère après extraction d'un tout venant qui renferme des blocs de péridotites saines de toute taille, dépourvus de nickel, pris dans une matrice terreuse riche en nickel. Ce tout venant est ensuite criblé à son humidité naturelle au moyen de différents outils (grizzly, wobbler, trommel, etc.) pour séparer la partie fine, minéralisée, des parties grossières, stériles. Ce criblage, accompagné parfois d'une légère attrition, livre un minerai d'une granulométrie supérieure à 50 mm et plus, fréquemment supérieure ou égale à 70 mm.

Le procédé suivant l'invention consiste à opérer à un tri sélectif du tout venant afin d'éliminer plus finement les éléments stériles qui polluent le minerai trié selon les procédés traditionnels.

Il autorise, avec une augmentation de la teneur, une meilleure récupération des gisements que les procédés traditionnels. Il devient alors possible d'exploiter des zones où la teneur du minerai trié selon les procédés traditionnels ne serait pas économique et qui le devient après enrichissement selon le procédé. La mise en oeuvre du procédé permet aussi, pour un niveau de teneur équivalent, d'augmenter le tonnage de réserves exploitables ou pour une même quantité de métal récupérée d'un même gisement, il permet d'augmenter la teneur, donc la recette. Dans d'autres cas enfin, on peut à la fois augmenter la teneur du minerai et le tonnage des réserves récupérables.

Pour essayer d'augmenter la teneur des minerais fournis par les mines, de nombreuses recherches ont été entreprises, notamment par la demanderesse (FR-A-2 320 781). D'autres procédés ont été élaborés et décrits dans un certain nombre de publications et de brevets antérieurs.

Malheureusement, ces procédés, pour performants qu'ils soient, n'ont pas pu être mis en oeuvre, en raison notamment des coûts d'investissement et des coûts opératoires qu'ils généraient.

Or on a maintenant trouvé un procédé particulièrement bien adapté aux minerais de nickel oxydés silicatés qui dérivent de l'altération supergène de péridotites (harzburgites très dominantes) dont le taux de serpentinisation est inférieur à 80% (faciès "normal", "intermédiaire" et supérieur" dans la terminologie SLN").

Le procédé objet de la présente invention consiste à mettre en pulpe le minerai et est caractérisé en ce qu'il consiste successivement: :
- à débourber le minerai mis en pulpe pendant au moins 1 minute et, de préférence, pendant au moins 2 minutes,
- à classifier en milieu humide le minerai débourbé de manière à séparer au moins une fraction fine à une maille de coupure entre la fraction fine et la fraction grenue comprise entre 80 microns et 3 mm et de manière à ne laisser que 10% en poids au maximum de fraction fine dans la fraction grenue,
- à soumettre la fraction grenue à une séparation densimétrique à une densité de partage comprise entre 1,7 et 2,5 et, de préférence entre 1,9 et 2,3 de manière à obtenir une fraction légère et une fraction lourde, et à récupérer la fraction légère séparée en tant que minerai enrichi.

Ce n'est qu'en suivant scrupuleusement les étapes mentionnées ci-dessus de débourbage, de classification dans les conditions indiquées et de séparation densimétriques dans les conditions indiquées que l'on obtient l'enrichissement recherché. Si l'on s'écarte des conditions prescrites à l'une des étapes, on n'obtient plus le résultat souhaité.

Pour mettre le minerai en pulpe on mélange une quantité connue de minerai avec une quantité donnée d'eau, de manière à avoir une pulpe de concentration contrôlée si possible entre 40 et 70% de solide en poids et, de préférence, entre 40 et 60%.

De préférence,
- on met en pulpe un minerai tout venant d'une granulométrie inférieure à 300 mm obtenu par criblage préalable.

Cette pulpe est ensuite débourbée.

L'objectif du débourbage est de séparer les particules fines des particules plus grenues sur lesquelles elles adhérent par des forces faibles ou de séparer les particules fines agglomérées entre elles.

De préférence ,
- on effectue le débourbage pendant 3 à 9 minutes et, notamment, pendant 4 à 6 minutes, en utilisant 100 à 30 parties en poids d'eau pour 100 parties de pulpe.

Les opérations de débourbage peuvent être effectuées à l'aide de différentes techniques qui sont opérationnelles au stade industriel.

On peut par exemple, dans les cas où la quantité de particules fines est petite, effectuer un lavage sur crible ou sur bande au moyen d'un courant d'eau sous pression.

Lorsque les quantités de particules fines sont plus grandes, on fait appel à des équipements plus complexes comme le tambour débourbeur constitué par un cylindre d'axe horizontal dans lequel s'effectue le mélange entre le minerai et l'eau grâce à des pales releveuses fixées à l'intérieur du tambour.

On peut aussi réaliser l'opération dans une bétonnière et mélanger 100kg de minerai à son humidité naturelle (comprise entre 20 et 30%) et une quantité d'eau comprise entre 30 et 50 kg. La durée nécessaire pour une opération efficace est au moins d'une minute et, de préférence, d'au moins deux minutes, mais l'opération peut être continuée pendant une heure et au-delà sans inconvénient.

Le même équipement peut s'employer pour des minerais pauvres en particules fines (appelés caillouteux).

On utilise aussi pour les minerais riches en particules fines un équipement appelé log-washer qui est constitué par une auge inclinée qui contient deux axes parallèles munies de pales disposées en spirales inverses. Le minerai est alimenté dans la partie médiane de l'appareil et soumis à l'agitation provoquée par les pales qui a pour effet de séparer les particules fines des particules grenues. Les fines sont ensuite entraînées par le courant liquide dans la partie basse où elles sont évacuées. Les particules grenues sont remontées à la partie supérieure et extraites.

Le même résultat peut être obtenu par la circulation d'une pulpe dans un tuyau de manière forcée par l'intermédiaire d'une pompe, ou en utilisant la gravité. Dans toutes ces opérations on ne cherche pas à produire de nouvelles particules fines par attrition, bien que cette production ne nuise pas au procédé et lui soit favorable.

On soumet la pulpe débourbée à une classification granulométrique de manière à en extraire la fraction fine naturellement riche en nickel. Cette opération peut être effectuée à l'aide des outils de séparation granulométriques connus tels que cribles, cyclones, classificateurs à vis, grilles courbes etc Le choix de l'équipement dépendant essentiellement de la maille de coupure désirée. Toutefois, quelle que soit cette maille, la classification doit être conduite de manière à ne laisser que 10% en poids au maximum de la fraction fine dans la fraction grenue, ce qui peut s'obtenir dans tous les cas en répétant, si nécessaire, les opérations de classification.

La maille de coupure souhaitée est comprise entre 80 microns et 3 mm et, de préférence, entre 200 microns et 500 microns.

On soumet la fraction grenue exempte de fines à une séparation gravimétrique.

L'objectif est de séparer les particules en utilisant leur différence de densité de manière à obtenir une fraction légère qui est enrichie en nickel et une fraction lourde qui est appauvrie et constitue un stérile.

La réalisation de cette opération peut se faire au moyen de différents équipements qui utilisent la force de gravité seule ou en combinaison avec la force centrifuge.

Une des méthodes consiste à plonger les particules préalablement exemptées de leurs fractions fines dans un médium de densité intermédiaire entre celles des deux fractions à séparer. Les fractions inférieures à la densité de partage vont flotter et être récupérées alors que les fractions lourdes vont plonger dans le médium.

La densité de partage est définie comme la densité de la particule qui a autant de chances de flotter que de plonger (d50 de la courbe de Tromp définie dans l'ouvrage. La valorisation des minerais de P Blazy PUF 1970 p 393). Il faut absolument utiliser une densité de partage comprise entre 1,7 et 2,5 et, de préférence, entre 1,9 et 2,3. Lorsque la densité est inférieure à la limite, la fraction légère est encore plus enrichie en nickel mais son pourcentage en poids est fortement réduit, ce qui limite l'intérêt de l'opération. A l'inverse pour une densité supérieure à la limite, la fraction légère représente un grand pourcentage en poids élevé, mais le taux d'enrichissement est trop petit.

Les équipements utilisables pour réaliser cette opération peuvent être regroupés en deux familles :
séparateur à bain de médium, comme par exemple le tambour séparateur, le Drew boy et autres
séparateur centrifuge, comme le cyclone milieu dense le DWP (Dina Whirpool) le Multigravity Separator, Larcodems (Large coal dense medium separator) et autres

Le médium est constitué d'une suspension de particules solides dans l'eau;
magnétite de densité 5,1 à 5,2
galène de densité 7,0 très rarement utilisée
ferrosilicium de densité 6,7 à 7,0 il peut être obtenu par broyage ou par atomisation.

Le médium peut comporter un seul type de particules ou un mélange de manière à obtenir la densité souhaitée.

Le coût du médium nécessite de le recycler ce qui est rendu possible grâce à ses propriétés magnétiques qui permettent de le séparer des particules de minerai.

Une autre technique utilisable consiste à faire appel aux ferrofluides dans un champ magnétique de manière à obtenir des densités apparentes supérieures à celles des médiums. Cette technique est mise en pratique sous le nom de séparation magnétogravimétrique ou de "magstream".

On peut aussi utiliser des équipements qui fonctionnent avec la seule pulpe de minerai soumise à une accélération différentielle provoquée par des oscillations (équipement appelé jig) ou par un mouvement hélicoïdal (spirale ou cône de Reichert).

On peut avoir intérêt à traiter dans des outils ou machines différentes des produits de granulométries différentes. Ainsi; il peut être avantageux lorsque on utilise des médiums de traiter les fractions les plus grenues (par exemple supérieur à 8mm) dans un séparateur à bain comme le tambour séparateur et les fractions plus fines (par exemple la fraction 200 microns-8mm) dans un séparateur centrifuge comme le cyclone milieu dense.

Il n'est pas non plus nuisible de broyer les produits avant le traitement gravimétrique, ce broyage pouvant être effectué à l'humidité naturelle du produit par des concasseurs gyratoires ou des concasseurs à cylindre ou même par des broyeurs à boulet en voie humide.

Lorsque on utilise les broyeurs à boulet on peut les alimenter directement avec la pulpe de minerai, l'appareil faisant à la fois office de débourbeur et de broyeur. Dans en cas, l'opération de débourbage-broyage doit également être suivie d'une opération de classification avant traitement gravimétrique. Selon les minerais à traiter, il pourra être avantageux d'utiliser pour cette opération des broyeurs dits "broyeurs autogènes" ou "broyeurs semi-autogènes".

Les exemples suivants illustrent l'invention.

### Exemple 1

Trois cents kilogrammes de minerai de granulométrie 0/70 mm ont été prélevés sur le gisement de Kopéto en Nouvelle-Calédonie. Ce minerai avait une humidité de 25%.

Dans une bétonnière de capacité 300 l, nous avons ajouté 25 litres d'eau puis ajouté 100 kg du minerai précédent de manière à constituer une pulpe à 60% de solide.

Après la mise en rotation de la bétonnière pendant 15 mn, la pulpe débour-bée ainsi obtenue a été déversée sur un crible vibrant arrosé par de l'eau, crible munis de 3 tamis superposés de maille 200 microns, 10 mm et 30mm. Le refus de chaque tamis a été soigneusement lavé avec de l'eau de manière à ce que les produits restants soient parfaitement propres. Cette opération a été répétée trois fois à l'identique, de manière à traiter la totalité du lot initial.

On a donc récolté quatre fractions :
- une fraction inférieure à 200 microns sous forme d'une pulpe très diluée
- une fraction 200 microns/10 mm ayant l'aspect d'une sable humide bien lavé
- une fraction > 10 mm ayant l'aspect d'un gravier humide bien lavé
- une fraction > 30 mm ayant également l'aspect d'un gravier humide.

Chaque fraction a été pesée puis échantillonnée de manière à déterminer sa teneur en nickel et son humidité. Il a donc été possible de calculer le bilan de l'opération de débourbage et criblage selon chaque fraction granulométrique.

| Fraction | Poids humide (kg) | % H₂0 | Poids sec (kg) | Poids % | % Ni | Répart. Ni |
|---|---|---|---|---|---|---|
| > 30 mm | 49.1 | 8.0 | 45.2 | 20.1 | 1.25 | 11.2 |
| 10-30 mm | 43.5 | 9.0 | 39.6 | 17.6 | 1.52 | 11.9 |
| 0.2-10 mm | 37.1 | 15.0 | 31.5 | 14.0 | 1.81 | 11.3 |
| <0.2 mm | - | 89.0 | 108.7 | 48.3 | 3.05 | 65.5 |
| Total | - | - | 225.0 | 100.0 | 2.25 | 100.0 |

La fraction supérieure à 30 mm considérée comme trop pauvre a été rejetée.

La fraction inférieure à 0,2mm a été conservée séparément car naturellement riche en nickel.

Les fractions 0,2 - 10 mm et 10 - 30 mm ont été soigneusement conservées de manière à préserver leur humidité naturelle.

Dans une cuve agitée de capacité 100 I, nous avons préparé un médium constitué de ferrosilicium, de magnétite et d'eau Pour 1 kg de ferrosilicium nous avons utilisé 2kg de magnétite, la quantité totale étant ajustée de manière à obtenir un médium de densité 2.3, c'est-à-dire que 1 I de médium avait une masse de 2,3 kg.

Dans cette cuve nous avons alors versé 13 kg de la fraction 10 - 30 mm humide et poursuivi l'agitation pendant 30 secondes de manière à bien homogénéiser le mélange. L'agitation est alors arrêtée et on attend 30 secondes.

Les produits flottants à la surface appelés "flottants" ont été récupérés, lavés soigneusement puis séchés, pesés et échantillonnés. L'échantillon ainsi obtenu a été analysé.

Les produits qui ne flottaient pas, appelés "plongeants" ont alors été traités de la même manière.

Il a donc été ainsi possible d'établir un bilan de l'opération :

| Fraction | Poids sec (kg) | Poids % | % Ni. | Répart. Ni |
|---|---|---|---|---|
| Flottants (d<2.3) | 5.9 | 45.4 | 2.03 | 60.6 |
| Plongeants (d>2.3) | 7.1 | 54.6 | 1.10 | 39.4 |
| Total | 13.0 | 100.0 | 1.52 | 100.0 |

Ce bilan met en évidence un enrichissement important dans les flottants puisque la teneur est supérieure de 0,51 % Ni à celle de l'alimentation et ce pour un rendement poids en flottant de 45,4 %.

Dans une ampoule à décanter de 1 litre de capacité nous avons préparé une solution de liqueur organique composée de bromoforme et d'alcool de manière à obtenir une solution de densité 2,3, c'est-à-dire que 1 l de cette solution a une masse de 2,3 kg.

Nous avons échantillonné la fraction 0,2/10mm de manière à récupérer 200 g représentatifs de l'ensemble. Cette fraction a été plongée dans un mélange d'eau et d'agent mouillant, connu sous le nom de "liqueur Ignatovic" puis laissé ainsi 30 mn avant d'être récupéré et égoutté. Ce produit a alors été introduit dans la liqueur organique de densité 2.3 puis le mélange a été agité pendant 20 secondes environ. A l'issue des 20 secondes la solution est laissée en repos pendant 1 minute. Au bout de 1 mn, on recueille les produits qui flottent à la surface de la liqueur (flottants) et ceux qui ont sédimenté au fond de l'ampoule (plongeants). Les produits ont alors été rincés puis séchés avant pesée et échantillonnage pour analyse chimique.

Il a donc été ainsi possible d'établir un bilan de l'opération.

| Fraction | Poids sec (g) | Poids % | % Ni. | Répart. Ni |
|---|---|---|---|---|
| Flottants (d<2.3) | 70.9 | 44.0 | 2.50 | 60.8 |
| Plongeants (d>2.3) | 89.6 | 56.0 | 1.27 | 39.2 |
| Total | 160.0 | 100.0 | 1.81 | 100.0 |

On constate là encore un enrichissement important en nickel puisque l'accroissement de teneur est de +0,6 % Ni par rapport à l'alimentation pour un rendement poids de 44,0%.

Si, aux produits appelés flottants issus des fractions 10/30 mm et 0,2/10 mm on ajoute la fraction < 0.2 mm du minerai traité on obtient alors un concentré total qui montre un accroissement de teneur important par rapport au minerai tout venant traité.

| | Poids % | % Ni | Répart. Ni |
|---|---|---|---|
| CONCENTRES | | | |
| fraction <0.2 mm | 48.3 | 3.05 | |
| flottants 0.2/10 mm | 6.2 | 2.50 | |
| flottants 10/30 mm | 8.0 | 2.03 | |
| TOTAL | 62.5 | 2.86 | 79.4 |

| STERILES | | | |
|---|---|---|---|
| fraction > 30 mm | 20.1 | 1.25 | |
| plongeants 0.2/10mm | 7.8 | 1.27 | |
| plongeants 10/30 mm | 9.6 | 1.10 | |
| TOTAL | 37.5 | 1.21 | 20.6 |
| MINERAI TOUT VENANT | 100.0 | 2.25 | 100.0 |

### Exemple 2

On prend 300kg de minerai de granulométrie 0/70 mm, échantillon jumeau de celui utilisé dans l'exemple 1.

Ces 300 kg sont posés sur crible vibrant à 30 mm et on arrose sous une pression d'environ 4 bars le produit ainsi déposé. L'arrosage se poursuit jusqu'à ce que la fraction refusée par le crible (de granulométrie supérieure à 30 mm) soit propre.

Le passant à 30 mm est alors déposé sur un crible à 10 mm à son tour dans les mêmes conditions que précédemment. On fait subir à la fraction inférieure à 10 mm le même traitement sur un crible à 200 microns.

Chacune des fractions ainsi obtenue est alors traitée de la même manière que dans l'exemple 1. On peut alors obtenir un bilan de l'opération de débourbage-criblage ainsi effectué.

| Fraction | Poids sec (kg) | Poids % | % Ni. | Répart. Ni |
|---|---|---|---|---|
| > 30 mm | 51.7 | 22.5 | 1.30 | 12.9 |
| 10 -30 mm | 43.7 | 19.0 | 1.60 | 13.4 |
| 0.2-10 mm | 49 5 | 21.5 | 2.05 | 19.4 |
| < 0.2 mm | 85.1 | 37.0 | 3.33 | 54.3 |
| Total | 230. | 100.0 | 2.27 | 100.0 |

La fraction >30 mm est toujours rejetée comme stérile.

Les fractions 10 - 30 mm et 0.2 - 10 mm sont soumises très exactement au même traitement que celui décrit dans l'exemple 1. Chacune de ces fractions donne donc un flottant et un plongeant à la densité de 2.3.

Le bilan final de l'opération est alors le suivant :

| | Poids % | % Ni | Répart. Ni |
|---|---|---|---|
| CONCENTRES | | | |
| fraction <0.2 mm | 37.0 | 3.33 | |
| flottants 0.2/10 mm | 14.2 | 2.27 | |
| flottants 10/30 mm | 9.5 | 2.10 | |
| TOTAL | 60.7 | 2.89 | 77.3 |

| STERILES | | | |
|---|---|---|---|
| fraction > 30 mm | 22.5 | 1.30 | |
| plongeants 0.2/10mm | 7.3 | 1.62 | |
| plongeants 10/30 mm | 9.5 | 1.10 | |
| TOTAL | 39.3 | 1.31 | 22.7 |
| MINERAI TOUT VENANT | 100.0 | 2.27 | 100.0 |

### Exemple 3 (Comparatif)

Nous reprenons un échantillon de chacune des fractions 10 -30 mm et 0.2 - 10 mm obtenus après débourbage criblage de l'exemple 1. Chacune de ces fractions est soumise à une séparation gravimétrique dans les mêmes conditions que celles de l'exemple 1 sauf en ce qui concerne la densité de la liqueur et du médium qui ont été portées de 2.3 à 2.7. On obtiendra donc des flottants et des plongeants à la densité de 2.7.

Les performances de l'opération de tri gravimétrique sont alors très différentes comme indiqué ci-après.

| Fraction 10 - 30 mm | | | |
|---|---|---|---|
| Fraction | Poids % | % Ni. | Répart. Ni |
| Flottants (d < 2.7) | 85.2 | 1.63 | 91.3 |
| Plongeants (d >2.7) | 14.8 | 0.89 | 8.7 |
| Total | 100.0 | 1.52 | 100.0 |

| Fraction 0.2 - 10 mm | | | |
|---|---|---|---|
| Fraction | Poids % | % Ni. | Répart. Ni |
| Flottants (d < 2.7) | 85.0 | 2.00 | 93.4 |
| Plongeants (d > 2.7) | 15.0 | 0.79 | 6.6 |
| Total | 100.0 | 1.81 | 100.0 |

Ramené à l'ensemble du minerai traité, on constate que le procédé mené de cette manière entraîne un enrichissement très modeste.

### Exemple 4 (Comparatif)

Nous reprenons un échantillon de chacune des fractions 10 - 30 mm et 0.2 - 10 mm obtenu après débourbage -criblage de l'exemple 1. Chacune de ces fractions est soumise à une séparation gravimétrique dans les mêmes conditions que celles de l'exemple 1 sauf en ce qui concerne la densité de la liqueur et du médium qui ont été baissés de 2.3 à 1.5. On obtiendra donc des flottants et des plongeants à la densité de 1.5.

Les performances de l'opération de tri gravimétrique sont alors très différentes comme indiqué ci-après.

| Fraction 10 - 30 mm | | | |
|---|---|---|---|
| Fraction | Poids% | % Ni. | Répart. Ni |
| Flottants (d < 1.5) | 0.5 | 3.15 | 1.0 |
| Plongeants (d>1.5) | 99.5 | 1.51 | 99.0 |
| Total | 100.0 | 1.52 | 100.0 |

| Fraction 0.2 - 10 mm | | | |
|---|---|---|---|
| Fraction | Poids % | % Ni. | Répart. Ni |
| Flottants (d < 1.5) | 1.0 | 3.40 | 1.9 |
| Plongeants (d > 1.5) | 99.0 | 1.79 | 98.1 |
| Total | 100.0 | 1.81 | 100.0 |

On constate que même si l'enrichissement est très élevé le rendement poids en flottant est si faible que l'opération ne présente aucun intérêt économique.

### Exemple 5

Dans un atelier pilote nous avons traité selon le procédé 100 tonnes de minerai de nickel oxydé de granulométrie 0/300 mm ayant une humidité de 25%.

Ce minerai est envoyé à un débit de 3 T/h un petit débourbeur de 1 m de diamètre et de 2.5 m de long. A l'entrée dans le débourbeur nous avons rajouté la quantité d'eau nécessaire pour obtenir une pulpe à 60% de solide.

Après un temps de séjour dans le débourbeur de 10 mn, la pulpe ainsi obtenue a été criblée à 30 mm, 10 mm à l'aide de cribles vibrants arrosés, la fraction inférieure à 10 mm a été tamisée à 200 microns sur un panneau tamiseur statique.

Les fractions obtenues ont été échantillonnées et pesées en continu pour les refus de criblage et de panneau tamiseur. La fraction inférieure à 200 microns a été échantillonnée, puis pompée en continu vers une lagune de stockage. Une chaîne de mesure constituée d'un débitmètre électromagnétique et d'un densimètre à rayonnement gamma a permis de mesurer la quantité de produits inférieurs à 200 microns.

Le bilan de cette opération est le suivant :

| Fraction | Poids sec (kg) | Poids % | % Ni. | Répart. Ni |
|---|---|---|---|---|
| 30 - 300 mm | 27.4 | 36.5 | 1.10 | 21.5 |
| 10 - 30 mm | 11.4 | 15.2 | 1.38 | 11.2 |
| 0.2 - 10 mm | 8.7 | 11.6 | 1.69 | 10.5 |
| < 0.2 mm | 27.5 | 36.7 | 2.89 | 56.8 |
| Total | 75.0 | 100.0 | 1.87 | 100.0 |

Un échantillon de 40kg de la fraction 10 - 30 mm a été prélevé, puis plongé dans un médium identique à celui décrit dans l'exemple 1, à ceci près que sa densité était de 2.1. Le bilan de l'opération a été le suivant

| Fraction | Poids % | % Ni. | Répart. Ni |
|---|---|---|---|
| Flottants (d < 2.1) | 30.0 | 2.01 | 43.7 |
| Plongeants (d > 2.1) | 70.0 | 1.11 | 56.3 |
| Total | 100.0 | 1.38 | 100.0 |

Un échantillon de 2 kg de la fraction 0.2 - 10 mm a été prélevé puis plongé dans une liqueur organique identique à celle décrite dans l'exemple 1 mais dont la densité était de 2,45.

Le bilan de l'opération a été le suivant :

| Fraction | Poids % | % Ni. | Répart. Ni |
|---|---|---|---|
| Flottants (d < 2.45) | 73.7 | 1.99 | 86.8 |
| Plongeants (d > 2.45) | 26.3 | 0.84 | 13.2 |
| Total | 100.0 | 1.69 | 100.0 |

### Exemple 6

Un échantillon de 60 kg de la fraction 0,2 - 10 mm, obtenue à l'exemple 1 a été divisé en deux échantillons jumeaux.

L'un des échantillons secondaires ainsi obtenu a été concassé à l'aide d'un concasseur à cylindre lisse à 5 mm.

Le second échantillon a été concassé à l'aide du même concasseur à 3 mm.

Chacun des produits ainsi concassé a été soumis à un traitement en ampoule à décanter identique à celui de l'exemple 1 (la densité de la liqueur étant maintenue à 2.3).

Le bilan en flottant a été le suivant

| | Concassé à 5 mm | Concassé à 3 mm |
|---|---|---|
| Rt Poids | 47.0 | 52.0 |
| % Ni | 2.56 | 2.52 |

### Exemple 7 (Comparatif)

Cent kilogrammes de minerai 0.50 mm ayant une humidité de 25% et une teneur en nickel de 2,45% ont été aussi versés tels quels dans une cuve de médium agitée. Le médium identique à celui de l'exemple 1 avait une densité de 2.10.

Après 30 secondes de mélange, l'agitation a été arrêtée et la suspension a été laissée une minute sans agitation.

On constate que dans ces conditions, il n'y a pratiquement pas de séparation, les fines du minerai s'étant réparties dans le médium qui est devenu très visqueux, interdisant toute séparation.

## Revendications

1. Procédé pour enrichir du minerai nickelifère oxydé qui comprend les stades successifs suivants :
- à mettre en pulpe le minerai,
- à débourber le minerai mis en pulpe pendant au moins 1 minute,
- à classifier en milieu humide le minerai débourbé de manière à séparer au moins une fraction fine à une maille de coupure entre la fraction fine et la fraction grenue comprise entre 80 microns et 3 mm et de manière à ne laisser que 10% en poids au maximum de fraction fine dans la fraction grenue,
- à soumettre la fraction grenue à une séparation densimétrique à une densité de partage comprise entre 1,7 et 2,5 de manière à obtenir une fraction légère et une fraction lourde, et
- à récupérer la fraction légère séparée en tant que minerai enrichi.

2. Procédé suivant la revendication 1 dans lequel on effectue la classification à une maille de coupure comprise entre 200 microns et 500 microns.

3. Procédé suivant la revendication 1 dans lequel on met en pulpe un minerai tout venant d'une granulométrie inférieure à 300 mm obtenu par criblage préalable.

4. Procédé suivant la revendication 1 dans lequel on effectue le débourbage pendant 3 à 9 minutes .

5. Procédé suivant la revendication 1 dans lequel on effectue le débourbage en utilisant 100 à 30 parties en poids d'eau pour 100 parties de pulpe.

6. Procédé suivant la revendication 1 dans lequel on effectue la séparation densimétrique dans un médium magnétique.

7. Procédé suivant la revendication 1 dans lequel on broye la fraction grenue avant la séparation gravimétrique.

8. Procédé suivant la revendication 1 dans lequel on réunit la fraction fine à la fraction légère.

9. Procédé suivant la revendication 1 dans lequel on débourbe le minerai mis en pulpe pendant au moins 2 minutes.

10. Procédé suivant la revendication 1 dans lequel la densité de partage est comprise entre 1,9 et 2,3.

## Patentansprüche

1. Verfahren zur Anreicherung von Nickel-Oxyd-Erz, welches die folgenden aufeinanderfolgendenden Schritte beinhaltet:
- Verarbeitung des Erzes zu Schlamm,
- Abschlammen des zu Schlamm verarbeiteten Erzes mindestens eine Minute lang,
- Klassifizierung des abgeschlammten Erzes in feuchter Umgebung, so dass mindestens ein feiner Anteil durch eine Kornscheide, die zwischen 80 Mikrometer und 3 Millimeter liegt, zwischen feinen Anteilen und graupigen Anteilen geschieden wird, und so dass nur maximal 10 % des Gewichts des feinen Anteils im graupigen Anteil verbleibt,
- Durchführung einer densimetrischen Abscheidung des graupigen Anteils mit einer Teilungswichte, die zwischen 1,7 und 2,5 liegt, so dass ein leichter und ein schwerer Anteil erhalten wird, und
- Gewinnung des leichten abgeschiedenen Anteils als angereichertes Erz.

2. Verfahren nach Anspruch 1, in welchem die Klassifizierung bei einer Kornscheide erfolgt, die zwischen 200 Mikrometer und 500 Mikrometer liegt.

3. Verfahren nach Anspruch 1, in welchem ein Roherz zu Schlamm verarbeitet wird, welches eine kleinere Korngröße als 300 mm aufweist und durch vorhergehendes Sieben erhalten wird.

4. Verfahren nach Anspruch 1, in welchem die Abschlammung 3 bis 9 Minuten lang durchgeführt wird.

5. Verfahren nach Anspruch 1, in welchem die Abschlammung unter Verwendung von 100 bis 30 Gewichtsanteilen Wasser auf 100 Anteile Schlamm durchgeführt wird.

6. Verfahren nach Anspruch 1, in welchem die densimetrische Abscheidung in einem magnetischen Feld erfolgt.

7. Verfahren nach Anspruch 1, in welchem der graupige Anteil vor der gravimetrischen Abscheidung zermahlen wird.

8. Verfahren nach Anspruch 1, in welchem der feine Anteil zu dem leichten Anteil hinzugefügt wird.

9. Verfahren nach Anspruch 1, in welchem das zu Schlamm verarbeitete Erz mindestens 2 Minuten lang abgeschlammt wird.

10. Verfahren nach Anspruch 1, in welchem die Teilungswichte zwischen 1,9 und 2,3 liegt.

## Claims

1. Process for enriching nickel-bearing oxide ore which comprises the following successive stages:
- pulping the ore,
- washing the pulped ore ,
- sorting the washed ore in a damp environment so as to separate off at least one fine fraction using a cutoff mesh to separate the fine fraction from the granular fraction of between 80 microns and 3 mm and so as to leave not more than 10% by weight of fine fraction in the granular fraction,
- subjecting the granular fraction to densimetric separation at a dividing density of between 1.7 and 2.5, so as to obtain a light fraction and a heavy fraction, and
- recovering the light fraction separated off as enriched ore.

2. Process according to claim 1, wherein the sorting is carried out at a cutoff mesh size of between 200 microns and 500 microns.

3. Process according to claim 1, wherein a run of mine ore with a particle size of less than 300 mm obtained by previous screening is pulped.

4. Process according to claim 1, wherein the washing is carried out for 3 to 9 minutes.

5. Process according to claim 1, wherein the washing is carried out using 100 to 30 parts by weight of water to 100 parts of pulp.

6. Process according to claim 1, wherein the densimetric separation is carried out in a magnetic medium.

7. Process according to claim 1, wherein the granular fraction is ground before the gravimetric separation.

8. Process according to claim 1, wherein the fine fraction is combined with the light fraction.

9. Process according to claim 1, wherein the pulped ore is washed for at least 2 minutes.

10. Process according to claim 1, wherein the dividing density is between 1.9 and 2.3.
